# EUROPEAN PATENT SPECIFICATION

(11) **EP 0 337 458 B1**
(45) Date of publication and mention of the grant of the patent: **19.01.1994**
(21) Application number: 89106631.8
(22) Date of filing: 13.04.1989
(51) Int. Cl.: G10H 7/00, G10H 7/08, G10H 1/12

(54) **Apparatus for synthesizing analog signals in PCM**
Vorrichtung zur Synthese von analogen Signalen in PCM
Dispositif de synthèse de signaux analogiques en PCM

(30) Priority: 13.04.1988 JP 90575/88
(43) Date of publication of application: 18.10.1989
(73) Proprietor: NAMCO, LTD., Ohta-Ku Tokyo 146 (JP)
(72) Inventor: Ogawa, Toru, Tokyo (JP); Sato, Seiichi, Ohta-ku Tokyo (JP)
(74) Representative: Weber, Otto Ernst, Dipl.-Phys.

(56) References cited:
- EP-A- 0 173 307
- EP-A- 0 229 926
- US-A- 4 460 890

## Description

### BACKGROUND OF THE INVENTION

### Field of the Invention:

The present invention relates to an analog signal synthesizing system in PCM and more particularly to such a system capable of reading PCM data corresponding to plural channels from a waveform memory and synthesizing an analog signal from such PCM data.

### Description of the Prior Art:

PCM has various superior characteristics such as very high resistance to noise, very high resistance to interference with the adjacent channel and others. Therefore, PCM has been currently utilized in various broadly widened applications such as synthesizers, musical compact disc devices, PCM communication systems and others.

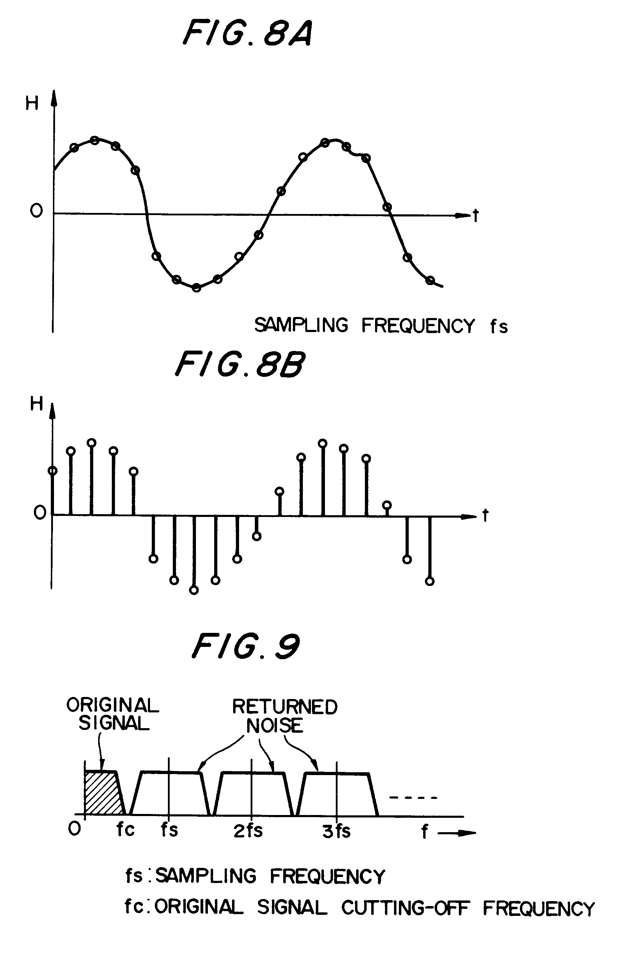

Figure 8 shows the principle of PCM wherein it is supposed that an analog signal such as voice is converted into PCM signal. As shown in Figure 8A, an analog signal is sampled with a predetermined sampling frequency to form a PAM wave as shown in Figure 8B. Such a PAM wave is quantized and encoded to provide PCM data.

If the PCM data so obtained are desired to re-convert into an analog signal, they are first decoded to form the PAM wave as shown in Figure 8B. The PAM wave is then passed through a low-pass filter to reproduce a signal wave having the original signal waveform.

When the analog signal is sampled with the frequency fₛ, there is obtained such a waveform spectra as shown in Figure 9. In Figure 9, the hatched part is a spectra in the original analog signal. If such a sampling is carried out, there are created a plurality of aliasing noises at locations integer times the sampling frequency, that is, fₛ, 2fₛ, 3fₛ and so on. These aliasing noises will be superposed over the waveform spectra in the present signal if the sampling frequency fₛ is too low. Thus, it becomes impossible to faithfully reproduce the original analog signal.

If the sampling frequency fₛ is too high, however, the amount of data to be handled increases to make the data processing very cumbersome.

In order to faithfully reproduce the original analog signal while minimizing the amount of data to be handled, thus, it is necessary to set the sampling frequency as low as possible within a range over which the aliasing noises are not mixed with the original signal.

In accordance with the sampling theorem, the sampling frequency may be set at a level two times or more the maximum frequency in the original analog signal to prevent the waveform spectra thereof from being mixed with the aliasing noises. If the sampling frequency is set at a level two times the maximum frequency of an objective analog signal, the amount of data to be handled can be minimized so that the original analog signal can be faithfully reproduced.

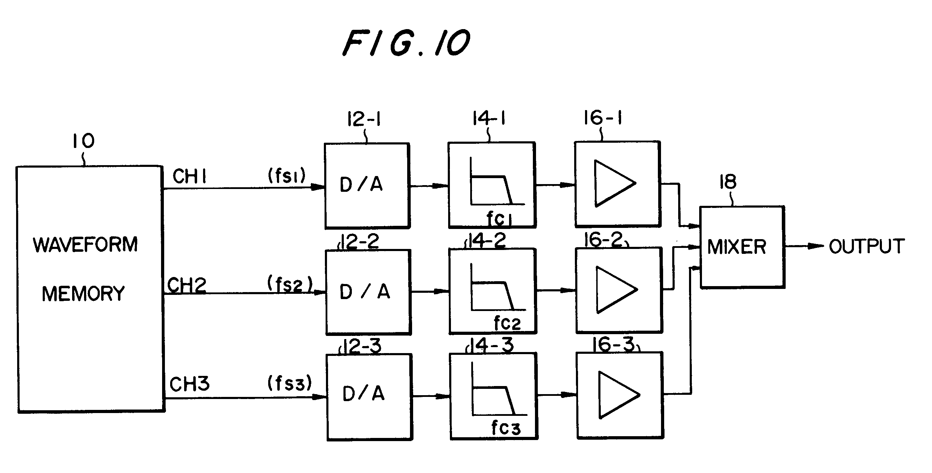

Figure 10 illustrates an example of the conventional analog signal synthesizing systems utilizing such PCM technique.

Such a system comprises a waveform memory 10 adapted to store a plurality of analog signals as PCM data which have been sampled with different sampling frequencies. PCM data corresponding to three channels are read out from the waveform memory 10 to synthesize an analog signal.

For example, if the analog signal synthesizing system is to be used to produce a synthesized sound combining a plurality of musical instruments, voice analog signals from the objective musical instruments, for example, guitar, drums and bass are previously stored in the waveform memory 10 as PCM data which are sampled with frequencies fₛ₁, fₛ₂ and fₛ₃ corresponding to those of the musical instrument.

PCM data having the respective sampling frequencies fₛ₁, fₛ₂ and fₛ₃ are read from the waveform memory 10 through the first, second and third channels and converted into analog signals through D/A converters 12-1, 12-2 and 12-3. These analog signals are then inputted into low-pass filters 14-1, 14-2 and 14-3, respectively. Aliasing noises are removed from the inputted analog signals by the respective low-pass filters 14-1, 14-2 and 14-3. Thereafter, the analog signals are applied to a mixer 18 through amplifiers 16-1, 16-2 and 16-3, respectively. At the mixer 18, the analog signals inputted thereinto and corresponding to three channels are mixed to form a synthesized analog from the three analog signals, for example, a synthesized analog sound waveform consisting of the sound waves representative of the guitar, drums and bass.

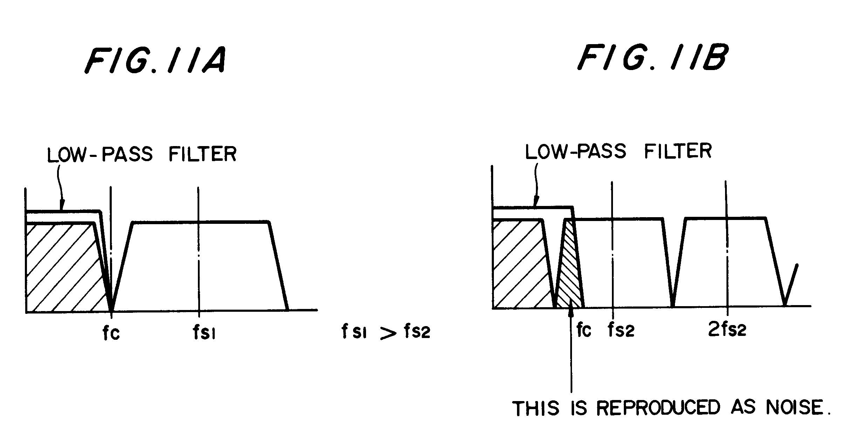

In order to use the low-pass filter 14 to remove the aliasing noises included in the PCM data, it is necessary to set the cut-off frequencies f_{c} in each of the low-pass filters 14-1, 14-2 and 14-3 at a level one-half the sampling frequency fₛ as shown in Figure 11A. This is because if the cut-off frequency f_{c} is higher than 1/2 fₛ as shown in Figure 11B, a part of the aliasing noises remains in the PCM data and will be reproduced as noises.

As described hereinbefore, however, the PCM data read from the waveform memory through the first, second and third channels are different from one another in the sampling frequencies fₛ₁, fₛ₂ and fₛ₃. There is thus a problem that the low-pass filters 14-1, 14-2 and 14-3 corresponding to the respective channels must be set at different cut-off frequencies f_{c1}, f_{c2} and f_{c3}.

In particular, such a conventional system is designed such that the sampling frequency of the PCM data read out from the waveform memory 10 is in one-to-one relationship with the cut-off frequency f_{c} in the low-pass filter 14. Therefore, each of the channels is poor in universality. This causes a problem in that the particular PCM data can be read out only from the corresponding channel, for example, the sound of a guitar from the first channel, the sound of drums from the second channel and the sound of a bass from the third channel.

When it is wanted to read many different PCM data, for example, ten or twenty different PCM data from the waveform memory 10, the number of channels corresponding to the number of the different PCM data portions must be provided. This results in a further problem in that the entire construction of the system becomes costly and more complicated.

From the US-A 4,460,890 a direct digital-to-digital rate conversion apparatus for converting an input signal at a first sampling rate to an output signal at a second sampling rate is known. This apparatus has a rate multiplier means to increase the frequency of the input signal and the multiplied signals from the rate multiplied means are interpolated using a nth orden n-polynomial interpolator to produce the output signal.

### Summary of the invention

It is the object of the present invention to provide an apparatus for synthesizing analog signals of the kind defined by the characterizing features of claim 1 wherein the aliasing noises included in the PCM data for the respective channels can be removed through a common low-pass filter.

This object is attained by the characterizing features of claim 1. Advantageous developments of the invention are given by the subclaims.

In such an arrangement, the waveform memory stores a plurality of analog signals as PCM data which are sampled with different sampling frequencies.

When the PCM data corresponding to each of the channels are read out from the waveform memory, they are then oversampled. Such an oversampling process may be a process for determining new data utilizing, for example, various interpolations such as primary interpolation, secondary interpolation and so on. There is also a process of using the same data as those of the waveform memory for each oversampled point and digital filtering them as original data to determine new data. Such digital filtering processes include a filtering in the frequency region due to the discrete Fourier transformation (digital low-pass filter) or another filtering in time region fold in the impulse response of the filter (smoothing). The digital filter is more fully described in "interface", November 1987, No. 126.

On such an oversampling, the read-out PCM data corresponding to each of the channels will have its sampling frequency which is shifted toward the side of high frequency.

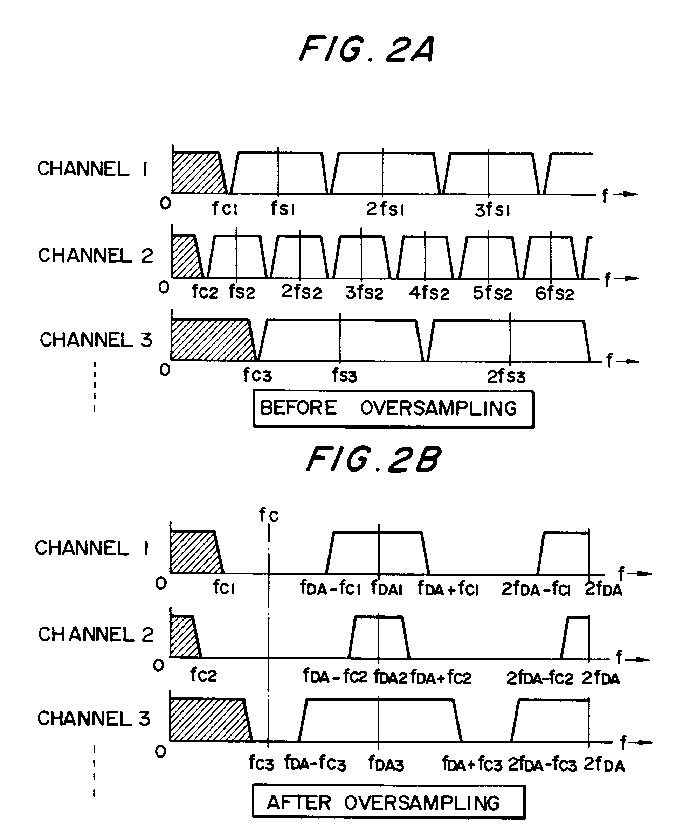

It is now assumed that PCM data are read out from the waveform memory through each of the channels as shown in Figure 2A. When the PCM data so read out are oversampled as described, the sampling frequency fₛ₁, fₛ₂ or fₛ₃ corresponding to each of the channels will be shifted toward a higher frequency f_{DA1}, f_{DA2} or f_{DA3}. In such a manner, the present invention shifts any aliasing noise having its lower frequency included in the PCM data toward the region of higher frequency so that the spectra in the original signal as shown by hatching in Figure 2A are more broadly spaced away from the spectra of the adjacent aliasing noise.

The oversampled PCM data for each channel are summed by adding means and converted into an analog signal through D/A converting means. Thereafter, the analog signal is applied to the low-pass filter. As described hereinbefore, the low-pass filter has its cut-off frequency set based on the sampling frequency shifted toward the higher frequency by the oversampling process, thereby removing any aliasing noise included in the PCM data from the input synthesized analog signal.

In accordance with the present invention, thus, the PCM data corresponding to each of the channels are oversampled to forcedly shift the aliasing noises having their lower frequencies toward the region of higher frequency. Therefore, the PCM data for each channel will have a widened spacing of frequency between the maximum frequency of the original signal and the minimum frequency of the aliasing noises. It is thus possible to set the same cut-off frequency of the low-pass filter for the PCM data corresponding to all the channels.

In accordance with the present invention, further, the PCM data for the respective channels are summed to convert them into an analog signal which in turn is applied to a low-pass filter, rather than the provision of separate low-pass filters for the respective channels. Accordingly, the aliasing noises included in the PCM data for the respective channels can be removed by means of a common low-pass filter. This allows the entire construction of the system to be manufactured more simply and less costly.

In accordance with the present invention, further, the PCM data will not be limited to those read out from the waveform memory through each of the channels. For example, different PCM data can be read out from the waveform memory through the same channel. Thus, the signal synthesizing system according to the present invention is very high in universality for each channel. Even if PCM data in excess of the capacity corresponding to the number of channels are stored in the waveform memory, any PCM data combination can be optionally read out from the waveform memory through each of the channels to synthesize them into an analog signal.

### BRIEF DESCRIPTION OF THE DRAWINGS

Figure 1 is a circuit diagram of a preferred embodiment of an analog signal synthesizing system in PCM constructed according to the present invention.

Figure 2 illustrates an example of oversampling; Figure 2A shows the spectra of frequency in PCM data corresponding to each of the channels prior to the oversampling; and Figure 2B shows the spectra of frequency after the oversampling.

Figure 3 is a block diagram of the entire construction of an analog signal synthesizing system to which the present invention is applied.

Figure 4 illustrates the memory map in the work memory shown in Figure 3.

Figures 5 and 6 illustrate given areas in the memory map shown in Figure 4B.

Figure 7 illustrates a linear interpolation.

Figure 8 illustrates the conversion of an analog signal into a PCM signal; Figure 8A shows the sampling of the analog signal with a predetermined frequency; and Figure 8B illustrates the sampled PAM wave.

Figure 9 shows the spectra of frequency in the PCM data which are sampled with given sampling frequencies fₛ.

Figure 10 is a block diagram of a circuit usable in the conventional analog signal synthesizing system in PCM.

Figure 11 illustrates cut-off frequencies for the PCM data; Figure 11A shows the sampling frequency set one-half the cut-off frequency; and Figure 11B shows the sampling frequency set one-half higher than the cut-off frequency.

### DETAILED DESCRIPTION OF THE PREFERRED EMBODIMENT

The present invention will now be described in connection with a preferred embodiment thereof illustrated in the drawings.

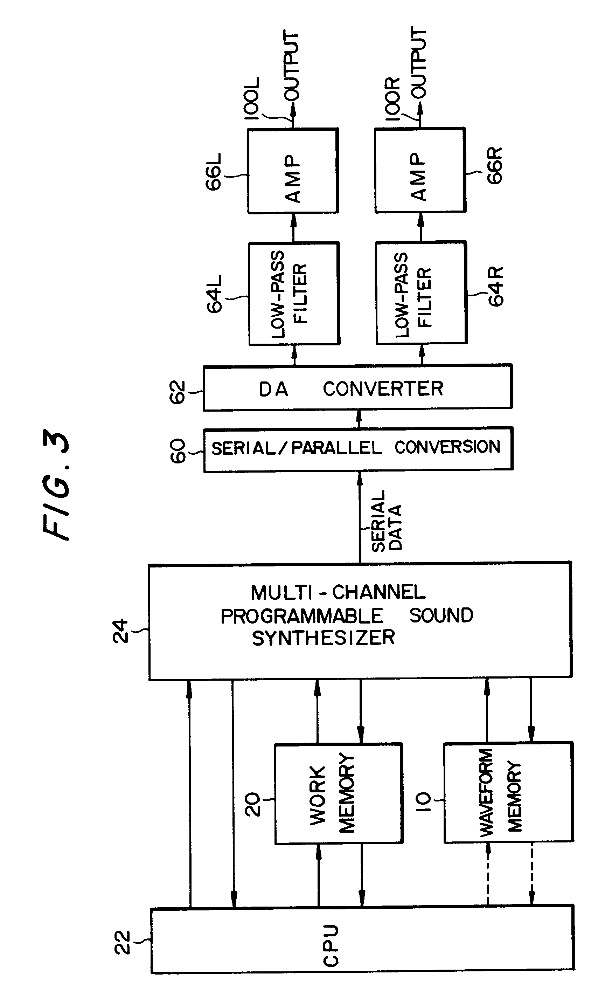

Referring now to Figure 3, there is shown an analog signal synthesizing system which is an preferred embodiment of the present invention.

The analog signal synthesizing system comprises a waveform memory 10 which stores a plurality of voice signals (analog signals) as PCM data which are sampled with different sampling frequencies. PCM data corresponding to plural channels are read out from the waveform memory 10 and used to produce an output synthesized analog voice signal 100R for a right-hand speaker and an output synthesized analog voice signal 100L for a left-hand speaker.

To this end, the system also comprises a work memory 20, a CPU 22 and a multi-channel programmable sound synthesizer 24.

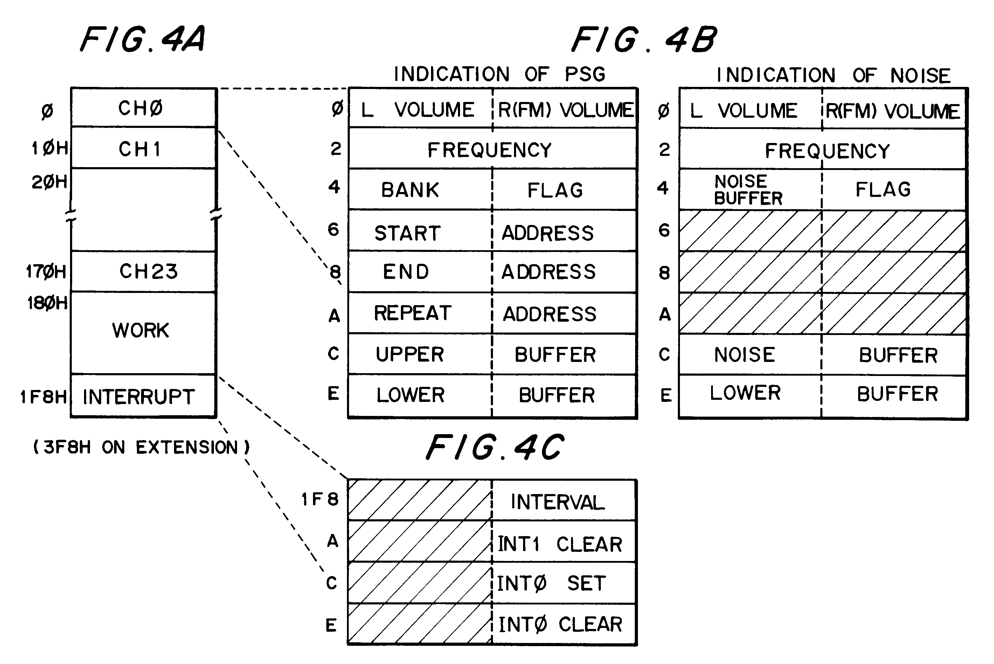

The work memory 20 is provided with channel areas 0 - 23 addressed by addresses 0 - 17FH and interrupt areas addressed by addresses 1F8H - 1FFH, as shown in Figure 4A. The channel areas are so arranged as shown in Figure 4B while the interrupt areas are so formed as shown in Figure 4C.

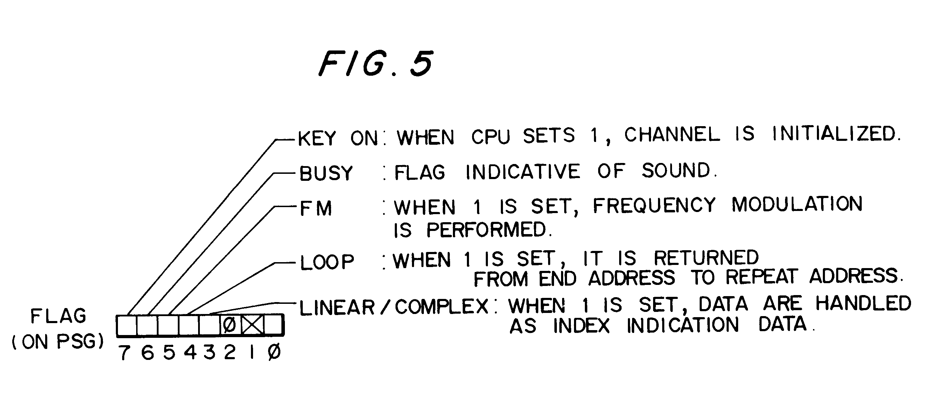

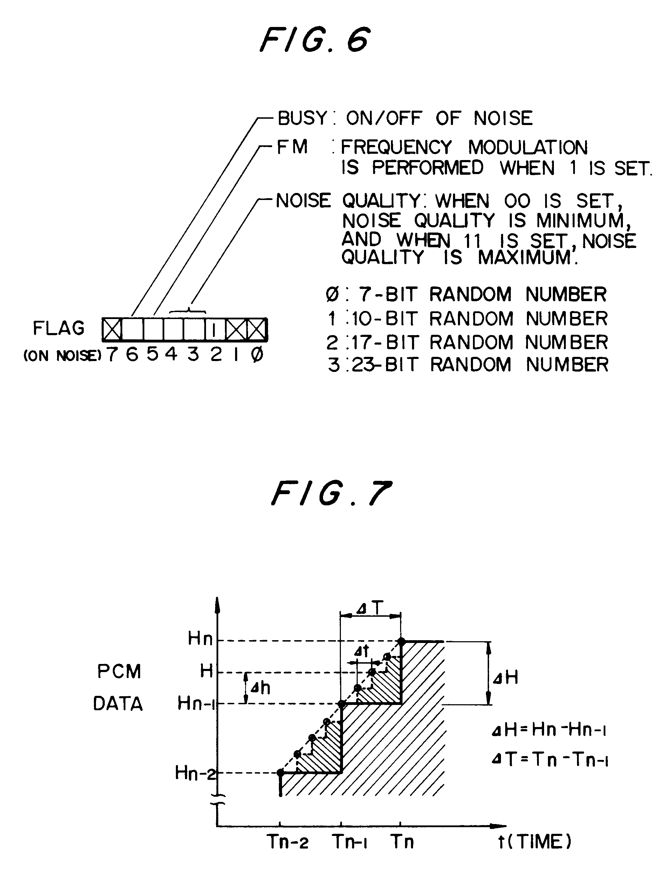

The magnitudes of left- and right-hand sounds in each of the channels are written in L-volume areas and R-volume areas for that channel as shown in Figure 4B, respectively. Data representative of the musical interval of a voice outputted through that channel are written in the frequency area thereof. Such flags as shown in Figures 5 and 6 are written in the flag area. At the start and end addresses, read-start and read-end addresses for the waveform memory 10 are respectively written in the work memory 20. These read-start and read-end addresses are used to address PCM data to be read out from the waveform memory 10 through the corresponding channel. The repeat address includes a repeat-start address written therein for repeatedly reading the addressed PCM data.

CPU 22 is adapted to perform a computation of analog signal synthesization in accordance with an operational program with the result being applied to the multi-channel programmable sound synthesizer 24 through the work memory 20.

More particularly, the CPU 22 computes data to be written in each of the areas shown in Figure 4A with the computed data being then written in the work memory 20. In addition, the CPU 22 outputs various data required to read the PCM data from the waveform memory 10 through each of the channels 0 - 23, which data are then applied to the multi-channel programmable sound synthesizer 24.

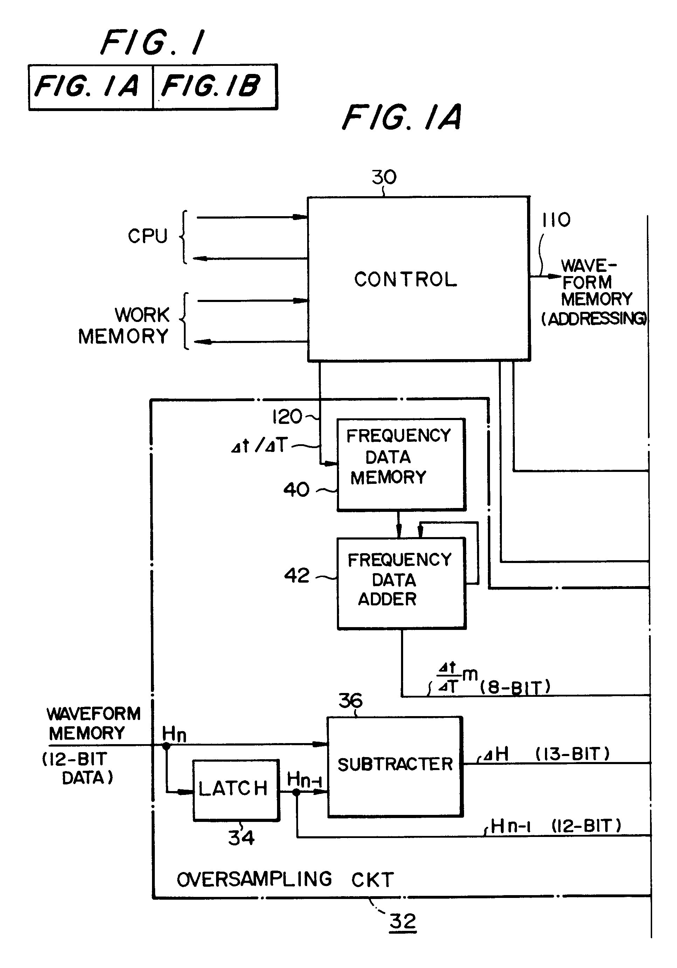

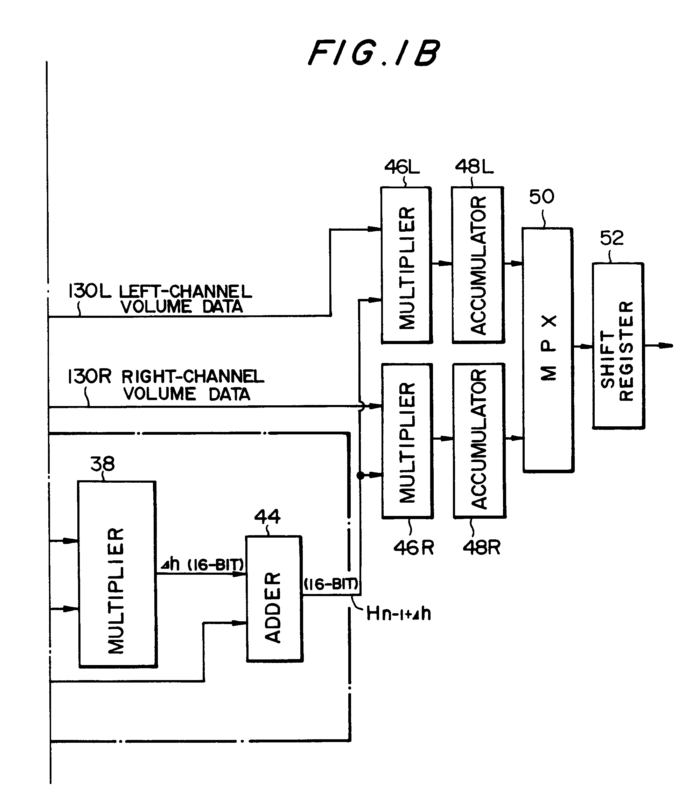

Figure 1 shows the circuit arrangement of the multi-channel programmable sound synthesizer 24.

The synthesizer 24 comprises a control circuit 30 for reading the PCM data from the waveform memory 10 for each channel, based on both the data outputted from the CPU 22 and the data written in the work memory 20; and an oversampling circuit 32 for oversampling the PCM data read out from the waveform memory 10 for each channel.

The control circuit 30 is adapted to sequentially output reading-out addresses for the PCM data from the respective channels 0 - 23 toward the waveform memory 10 using the time sharing process. Thus, the PCM data for each channel are addressed by the corresponding reading-out address and sequentially read out from the waveform memory 10. The PCM data so read are then applied to the oversampling circuit 32.

If the musical interval is set higher, the control circuit 30 will increment the PCM data reading-out address at a shortened time interval. If the musical interval is set lower, the control circuit 30 will increment the reading-out address at a prolonged time interval.

At the same time, the control circuit 30 outputs frequency data 120 representing the musical interval of the read PCM data toward the oversampling circuit 32 while outputting volume data 130R and 130L indicating the right- and left-hand volumes toward multipliers 46R and 46L, respectively.

The oversampling circuit 32 is adapted to oversample the PCM data read out from the waveform memory 10 for each channel so that the sampling frequency of the read PCM data will be shifted toward the side of higher frequency.

The oversampling may be accomplished by using any suitable process such as primary interpolation (linear interpolation), secondary interpolation, digital filtering or the like. In the illustrated embodiment, the PCM data is processed by using the linear interpolation such that they will be shifted toward the side of higher frequency.

It is now assumed that PCM data for a channel are read out from the waveform memory 10 in the order of Hₙ₋₁, Hₙ and so on as shown in Figure 7. In such a case, the m-th interpolation data H between the PCM data Hₙ₋₁ and Hₙ can be determined as follows (m = 0, 1, ....): 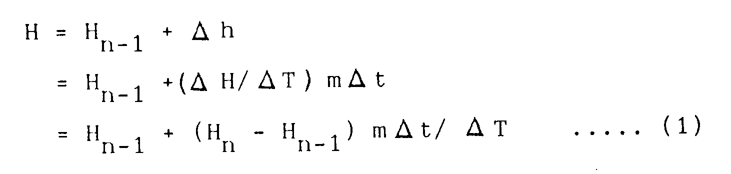
where ${\text{Δ T = T}}_{\text{n}} {\text{- T}}_{\text{n-1}}$ ; and each of Tₙ₋₁, Tₙ .... represents time at which the PCM data for each channel are outputted from the waveform memory 10.

When one of the interpolation data between the PCM data Hₙ₋₁ and Hₙ is determined by such a linear interpolation equation, the sampling frequency fₛ of the PCM data read out from the waveform memory 10 can be shifted toward the side of higher frequency by two times the sampling frequency, that is, up to 2fₛ. If two of the interpolation data between the PCM data are determined, the sampling frequency can substantially be increased up to three times.

As seen from Figure 1, the PCM data read out from the waveform memory 10 at this time are 12 bits, the data outputted from a subtractor 36 are 13 bits and the data outputted from a frequency data memory 40 are 8 bits. These data are computed at multiplier 38 and adder 44 for interpolation. The resulting PCM data will be extended to 16 bits with its resolution being increased.

For the linear interpolation, the oversampling circuit 32 comprises a latch circuit 34, the subtractor 36, the multiplier 38, the frequency data memory 40, a frequency data adder 42 and an adder 44.

The PCM data Hₙ read out from the waveform memory 10 are applied to the latch circuit 34 and the subtractor 36.

The latch circuit 34 is adapted to output the previously inputted PCM data Hₙ₋₁ toward the subtractor 36 and adder 44. From the PCM data Hₙ and Hₙ₋₁ thus inputted, the subtractor 36 computes ${\text{Δ H = H}}_{\text{n}} {\text{- H}}_{\text{n-1}}$ 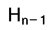 which in turn is applied to the adder 38.

The frequency data memory 40 receives an initial value (Δt/ΔT) from the control circuit 30 as frequency data representative of the musical interval of the PCM data. The frequency data adder 42 utilizes this initial value (Δt/ΔT) to compute m( Δt/ΔT) which in turn is applied to the multiplier 38.

Based on the data so inputted, the multiplier 38 computes $\text{Δh = ( Δ H/Δ T) mΔt}$ which in turn is applied to the adder 44.

The adder 44 totalizes the data thus inputted therein to compute the linear interpolation data H shown in the equation (1), which in turn are applied to the multipliers 46R and 46L.

Each of the multipliers 46R and 46L multiplies the PCM data from the oversampling circuit 32 by the right- or left-hand data 130R or 130L with the result being then applied to the corresponding one of right-channel and left-channel accumulators 48R and 48L.

The multi-channel programmable sound synthesizer 24 is adapted to repeat the aforementioned computation for all the channels 0 - 23 using the time sharing process. The computed data corresponding to all the channels 0 - 23 are sequentially accumulated at the accumulators 48R and 48L.

If the PCM data for the 23-th channel have been accumulated, the accumulated values in the right- and left-channel accumulators 48R and 48L are then applied sequentially to a shift register 52 through a multiplexer 50. The multiplexer 50 then converts the accumulated values for the left- and right-channels into serial data which in turn are outputted therefrom. These serial data are then applied to a D/A converter 62 through a serial-parallel converting circuit 60 shown in Figure 3.

The conversion of the accumulated values into the serial data is performed since the synthesizer 24 of the illustrated embodiment is in the form of a serial data output type one-chip element which requires the reduced number of output pins. On the contrary, if the synthesizer 24 is in the form of a parallel data output type one-chip element having the increased number of output pins, the multiplexer 50, shift register 52 and serial-parallel converting circuit 60 may be omitted.

After the accumulated values for the right- and left-channels have been inputted in the D/A converter 62 through the serial-parallel converting circuit 60, they are converted into analog signals thereat which in turn are applied to the right-and left-channel low-pass filters 64R and 64L, respectively.

Each of the low-pass filters 64R and 64L has its own cut-off frequency f_{c} set based on the corresponding sampling frequency which has been shifted to the side of higher frequency. As a result, any aliasing noise included the PCM data may be removed from the analog signals inputted therein. The analog signals are then outputted therefrom through amplifiers 66R and 66L as voice signals 100R and 100L for right- and left-hand channels.

The operation of such an arrangement will be described below:
The signal synthesizing system of the illustrated embodiment is adapted to sequentially read PCM data from the waveform memory 10 for each of the channels 0 - 23 through the time sharing process.

Figure 2A shows the spectra of frequency in the PCM data read out from the waveform memory 10 for the respective channels. As described hereinbefore, the PCM data have its sampling frequency fₛ which has been shifted to two times the maximum frequency of the original analog signal. Therefore, the PCM data read out from the waveform memory 10 through each of the channels will include the spectrum of the original signal shown by hatching which is created in close proximity to the spectrum of the aliasing noise. If there is not set a cut-off frequency f_{c} inherent in each of the channels, no aliasing noise can be removed reliably from the PCM data.

On the contrary, the analog signal synthesizing system of the present invention comprises the oversampling circuit 32 for appropriately processing the PCM data read out from the waveform memory 10 for each channel so that the sampling frequency of the PCM data for each channel will be shifted to the side of higher frequency as shown in Figure 2B.

In other words, the illustrated embodiment is adapted to determine the data H between the adjacent PCM data Hₙ₋₁ and Hₙ by means of the linear interpolation, as shown in Figure 7. Therefore, the rows of data having lower sampling frequencies shown in Figure 2A can be converted into the other rows of data which are assumed that they are sampled with higher frequencies f_{DA}, such that the apparent sampling frequency f_{DA} in the data row for each channel will be forcedly shifted to the side of higher frequency.

At this time, if one of the PCM interpolated data H is determined between the adjacent PCM data, the apparent sampling frequency can be increased up to two times. If interpolated data H of n in number (n is an integer) are determined between the respective adjacent PCM data, the apparent sampling frequency f_{DA} can be increased up to (n+1) times the sampling frequency fₛ.

By thus shifting the apparent sampling frequency f_{DA} of the PCM data read out from the waveform memory 10 through each channel toward the side of higher frequency, the aliasing noises having lower frequencies for each channel can be forcedly shifted toward the side of higher frequency so that the spacing of frequency between the original signal and any aliasing noise will be expanded.

Even if the oversampled PCM data for each channel are synthesized by the use of the accumulators 48R and 48L, therefore, the original signal included in the synthesized PCM data will be overlapped by any aliasing noise with the spacing of frequency therebetween becoming sufficient.

In this connection, the sampling frequencies of the PCM data stored in the waveform memory 10 are previously known. When the PCM data are oversampled, thus, the maximum frequency of the original signal components included in all the PCM data as well as the minimum frequency of the aliasing noises can be previously determined.

If the cut-off frequencies f_{c} in the low-pass filters 64R and 64L are established between the maximum frequency of the original signals and the minimum frequency of the aliasing noises, any aliasing noise included in the PCM data for each channel can be reliably removed only be providing the left- and right-channel low-pass filters 64L and 64R at the output stage of the D/A converter 62.

Thus, the illustrated embodiment of the present invention requires only a single low-pass filter 64R for all the right-hand channels and only a single low-pass filter 64L for all the left-hand channels so as to reliably remove the aliasing noises included in the PCM data outputted through all the channels 0 - 23.

In accordance with the present invention, PCM data having any sampling frequency may be read out from the waveform memory through each of the channels 0 - 23. Even if the waveform memory 10 stores 25 or more different types of PCM data, thus, any combination of the PCM data can be read out from the waveform memory 10 through the total number of 24 channels 0 - 23 and synthesized into an analog signal. In comparison with the conventional signal synthesizing systems wherein the types of PCM data are established at one-to-one relative to the number of channels, the entire system of the present invention may be very well improved in universality and simplicity.

It is to be understood that the present invention is not limited to the illustrated embodiment. Many modifications and changes thereof may be carried out without departing from the spirit and scope of the invention as defined in claims.

While the illustrated embodiment has been described as to the linear interpolation for oversampling, the present invention may be applied to any other interpolating process such as secondary interpolation, cubical interpolation or Lagrange's interpolation.

The oversampling process may be similarly accomplished by any other interpolating process such as digital filtering process.

While the PCM data Hₙ₋₁, Hₙ and so on themselves are not interpolated in the illustrated embodiment, they may be interpolated if required.

While the illustrated embodiment has been described as to the synthesization of voice signals, the present invention may be similarly applied to the synthesization of any other analog signals, if desired.

As will be apparent from the foregoing, the signal synthesizing system of the present invention can be simplified and reduced in manufacturing cost since a common low-pass filter is used to remove the aliasing noise included in the PCM data for each channel, comparing to the conventional signal synthesizing systems wherein a low-pass filter having its inherent cut-off frequency must be provided for each channel.

In accordance with the present invention, further, PCM data sampled with any type of sampling frequency may be read out from the waveform memory through each of the channels. Thus, more types of analog signals can be synthesized by the use of less channels, comparing to the conventional signal synthesizing systems wherein the types of PCM data to be read out are limited for each of the channels.

Even if the signal synthesizing system of the present invention includes the same number of channels as those of the prior art, therefore, PCM data exceeding the number of channels may be stored in the waveform memory. These PCM data can be read out from the waveform memory in any combination to synthesize and output more types of analog signals. Furthermore, where the types of PCM data written in the waveform memory coincide with those of the conventional systems, the number of channels may be decreased, if required. This also results in simplification of the entire construction of the system and reduction of the manufacturing cost.

## Claims

1. An apparatus for synthesizing analog signals, said apparatus comprising waveform memory (10) for storing a plurality of analog signals coded as PCM data sampled with different sampling frequencies, portions of said PCM data corresponding to plural channels being read from said waveform memory and used to synthesize the analog signals, said apparatus being characterized in that it comprises:
oversampling means (32) for shifting the sampling frequency of said PCM data read from said waveform memory (10) for each channel to a higher frequency;
means for summing (48) said oversampled PCM data of the respective channels;
D/A converting means (62) for converting the summed data into an analog signal; and
a common low-pass filter (64) for setting a cut-off frequency based on said sampling frequencies shifted to said higher frequency and for eliminating any aliasing noise included in the PCM data from the synthesized analog signal;
whereby the elimination of the aliasing noise included in the PCM data for each channel can be carried out at the common low-pass filter (64).

2. An apparatus as defined in claim 1, characterized by a work memory (20) including a plurality of channel areas in each of which the data for each channel are stored;
a CPU (22) for performing a computation synthesizing the analog signals in accordance with a predetermined operational program and writing the output data of each channel into the corresponding channel area in said work memory (20), said CPU (22) being further adapted to compute and output data required to read the PCM data from said waveform memory (10) for each channel; and
a control circuit (30) for reading the PCM data from said waveform memory (10) for each channel and inputting them into said oversampling means (32), based on the data computed by and outputted from said CPU (22) and the data written in said work memory (20).

3. An apparatus as defined in claim 2, characterized in that said control circuit (30) is adapted to sequentially output PCM data reading address for each channel toward said waveform memory (10) in a time sharing manner and to sequentially read PCM data addressed by each of the reading addresses for each channel.

4. An apparatus as defined in claim 3, characterized in that wherein said control circuit (30) is adapted to increment the PCM reading address for any channel at a shortened time interval when it is desired to set a higher interval of said channel and to increment the PCM reading address at a prolonged time interval when it is desired to set a lower interval in said channel, whereby the musical interval of the PCM data read for said channel can be controlled.

5. All apparatus as defined in claim 4, characterized in that said waveform memory (10) is adapted to store the PCM data which exceed the number of the channels used and wherein said control circuit (30) is adapted to read said PCM data from the channels in any combination and then to input them into said oversampling means (32).

6. An apparatus as defined in claim 1, characterized in that said oversampling means (32) is adapted to N-order interpolate the PCM data read from said waveform memory (10) for each channel (where N is an integer) and to shift the sampling frequency of the PCM data for each channel into the side of high frequency.

7. An apparatus as defined in claim 1, characterized in that said oversampling means (32) is adapted to interpolate the PCM data read from said waveform memory (10) for each channel using the Lagrange's interpolation formula and to shift the sampling frequency of said PCM data for each channel into the side of high frequency.

8. An apparatus as defined in claim 1, characterized in that said oversampling means (32) is adapted to interpolate the PCM data read from said waveform memory (10) for each channel in a digital filtering manner and to shift the sampling frequency of said PCM data for each channel into the side of high frequency.

9. An apparatus as defined in claim 6, characterized in that said oversampling means (32) is adapted to compute the PCM data read from said waveform memory (10) in the order of Hₙ₋₁, Hₙ .... so as to obtain the m-th interpolated data H (where m is an integer representative of 0, 1 ...) between Hₙ₋₁ and Hₙ by the following equation: 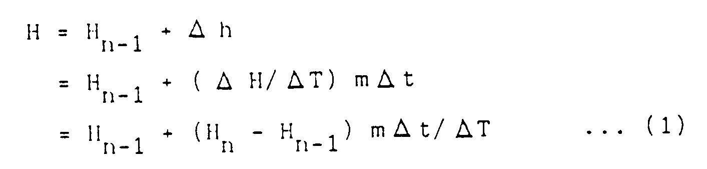 but ${\text{Δ T=T}}_{\text{n}} {\text{-T}}_{\text{n-1}}$ ,
where Tₙ₋₁, Tₙ ... represent times at which each of the PCM data is read and Δ t is a time interval for each of the interpolated data,
whereby the PCM data for each of said channels can be N-order interpolated.

10. An apparatus as defined in claim 9, characterized in that said oversampling means (32) comprises:
a latch circuit (34) for holding and outputting the PCM data Hₙ₋₁ inputted thereinto from said waveform memory (10);
a subtractor (36) for computing and outputting ${\text{Δ H=H}}_{\text{n}} {\text{-H}}_{\text{n-1}}$ from the PCM data Hₙ newly inputted from said waveform memory (10) and the previous PCM data Hₙ₋₁ outputted from said latch means (34);
a frequency data memory (40) for receiving an initial value (Δ t/ Δ T) of the frequency data representative of the musical interval of the PCM data;
a frequency data adder (42) for computing m(Δt/ΔT) using said initial value in said frequency data memory (40);
a multiplier (38) for computing $\text{Δ h=(ΔH/ ΔT) mΔT}$ , based on input data from said adder (42) and frequency data memory (40); and
an another adder (44) for computing and outputting the interpolated data H obtained from said equation (1), based on input data from said multiplier (33) and latch circuit (34).

11. An apparatus as defined in claim 2, characterized in that said waveform memory (10) is adapted to store PCM data which exceed the number of channels used and wherein said control circuit (30) is adapted to read said PCM data For each channel in any combination and to input them into said oversampling means (32).

12. An apparatus as defined in claim 3, characterized in that said oversampling means (32) is adapted to compute the PCM data read from said waveform memory (10) in the order of Hₙ₋₁, Hₙ .... so as to obtain the m-th interpolated data H (where m is an integer representative of 0, 1 ...) between Hₙ₋₁ and Hₙ by the following equation: 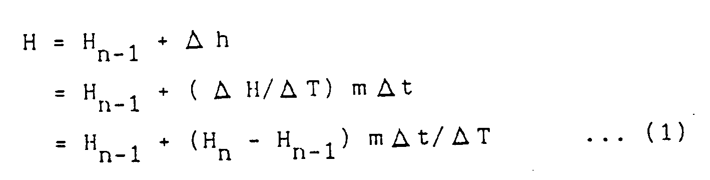 but ${\text{Δ T=T}}_{\text{n}} {\text{-T}}_{\text{n-1}}$ ,
where Tₙ₋₁, Tₙ ... represent times at which each of the PCM data is read and Δ t is a time interval for each of the interpolated data,
whereby the PCM data for each of said channels can be N-order interpolated.

13. An apparatus as defined in claim 12, characterized in that said control circuit is adapted to output the initial value Δ t/ΔT of the frequency data representative of the musical interval of PCM data newly read from said waveform memory (10) and wherein said oversampling means (32) comprises a latch circuit (34) for holding and outputting the PCM data Hₙ₋₁ inputted thereinto from said waveform memory (10); a subtractor (36) for computing and outputting ${\text{Δ H=H}}_{\text{n}} {\text{-H}}_{\text{n-1}}$ from the PCM data Hₙ newly outputted from said waveform memory (10) and the previous PCM data Hₙ₋₁ outputted from said latch means (34); a frequency data memory (40) for receiving an initial value ( Δ t/ΔT) of the frequency data representative of the musical interval of the PCM data; a frequency data adder (42) for computing m(Δ t/ΔT) using said initial value in said frequency data memory (40); a multiplier (38)for computing $\text{Δ h=(ΔH/ΔT) mΔT}$ 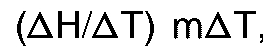 , based on input data from said adder and frequency data memory (42); and an another adder (44) for computing and outputting the interpolated data H obtained from said equation (1), based on input data from said multiplier (38) and latch circuit (34).

14. An apparatus as defined in claim 10, characterized in that said oversampling means (32) is adapted to repeatedly perform the N-order interpolation of PCM data for each channel in a time sharing manner.

15. An apparatus as defined in claim 14, characterized in that said summing means (48) is adapted to sequentially accumulate the computed data outputted from said oversampling means (32) for the respective channels and to output the accumulated value toward said D/A converting means (62) as the computed data for the last channel has been added into the previous accumulated data.

16. An apparatus as defined in claim 2, characterized in that said oversampling means (32) comprises right- and left-channel multipliers (46R, 46L) all of which are provided in the backward stage of said oversampling means (32) and right- and left-channel adding means (48R, 48L) which are provided in the backward stages of said right- and left-channel multipliers (46R, 46L), said control circuit (30) being adapted to output volume data indicating left and right volumes in the read PCM data toward said right- and left-channel multipliers (46R, 46L), said right- and left-channel multipliers (46R, 46L) being adapted to multiply the interpolated data H outputted from said oversampling means (32) by said right- and left-channel volume data, and said right- and left-channel adding means (48R, 48L) being adapted to sequentially accumulate the computed data sequentially outputted from the corresponding multiplier for the respective channels and to output the accumulated data toward the D/A converting means (62) in the backward stage thereof as the accumulation is completed for the last channel.

17. An apparatus as defined in claim 16, characterized in that said low-pass filter means (64) includes right- and left-channel low-pass filters (64R, 64L), said right-channel low-pass filter (64R) being adapted to eliminate aliasing noises included in the PCM data from the output of said right-channel adding means (48R) through said D/A converting means (62) and said left-channel low-pass filter (64L) being adapted to eliminate aliasing noises included in the PCM data from the output of said left-channel adding means (48L) through said D/A converting means (62).

18. An apparatus as defined in claim 13 characterized in that said oversampling means (32) is adapted to repeatedly perform the N-order interpolation of PCM data for each channel in a time sharing manner.

19. An apparatus as defined in claim 18, characterized by right- and left-channel multipliers (46R, 46L) all of which are provided in the backward stage of said oversampling means (32) and right- and left-channel adding means (48R, 48L) which are provided in the backward stages of said right- and left-channel multipliers (46R, 46L), said control circuit (30) being adapted to output volume data indicating left and right volumes in the read PCM data toward said right- and left-channel multipliers (46R, 46L), said right- and left-channel multipliers (46R, 46L) being adapted to multiply the interpolated data H outputted from said oversampling means (32) by said right- and left-channel volume data, and said right- and left-channel adding means (48R, 48L) being adapted to sequentially accumulate the computed data sequentially outputted from the corresponding multiplier for the respective channels and to output the accumulated data toward the D/A converting means (62) in the backward stage thereof as the accumulation is completed for the last channel.

20. An apparatus as defined in claim 19 characterized in that said low-pass filter means (64) includes right- and left-channel low-pass filters (64R, 64L), said right-channel low-pass filter (64R) being adapted to eliminate aliasing noises included in the PCM data from the output of said right-channel adding means (48R) through said D/A converting means (62) and said left-channel low-pass filter (64L) being adapted to eliminate aliasing noises included in the PCM data from the output of said left-channel adding means (48L) through said D/A converting means (62).

21. An apparatus as defined in claim 1, characterized in that said oversampling means (32) is adapted to shift the PCM data read for each channel toward the side of high frequency while extending the number of bits in said PCM data.

## Patentansprüche

1. Eine Vorrichtung zur Synthese von analogen Signalen, welche einen Wellenformspeicher (10) zum Speichern einer Vielzahl von als PCM-Daten codierten Analogsignalen aufweist, wobei die PCM-Daten mit unterschiedlichen Abtastfrequenzen abgetastet wurden, wobei Bereiche dieser PCM-Daten mit vielen Kanälen korrespondieren, welche aus dem Wellenformspeicher ausgelesen und zur Synthese von Analogsignalen verwendet werden,
dadurch **gekennzeichnet**,
daß sie folgendes umfaßt:
eine Überabtasteinrichtung (32) zum Schieben der Abtastfrequenz der aus dem Wellenformspeicher (10) gelesenen PCM-Daten für jeden Kanal in eine höhere Frequenz;
eine Einrichtung zum Aufsummieren (48) der überabgetasteten PCM-Daten der betreffenden Kanäle;
eine D/A-Wandlereinrichtung (62) zum Umwandeln der aufsummierten Daten in ein Analogsignal; und
einen herkömmlichen Tiefpaßfilter (64) zum Festsetzen einer Grenzfrequenz, welche auf die Abtastfrequenzen bezogen ist, die zu der höheren Frequenz geschoben sind, und zur Beseitigung jedweden Umfaltrauschens, welches in den PCM-Daten vom aufbereiteten Analogsignal eingeschlossen ist;
wobei die Beseitigung des Umfaltrauschens, welches in den PCM-Daten für jeden Kanal enthalten ist, vom üblichen Tiefpaßfilter (64) ausgeführt werden kann.

2. Vorrichtung nach Anspruch 1,
**gekennzeichnet** durch
einen Arbeitsspeicher (20), welcher eine Vielzahl von Kanalbereichen einschließt, in welchem jeweils die Daten für jeden Kanal gespeichert sind;
eine zentrale Verarbeitungseinheit CPU (22) zur Ausführung einer Berechnung, welche die Analogsignale in Übereinstimmung mit einem vorgegebenen Arbeitsprogramm aufbereitet und zum Einschreiben der Ausgangsdaten eines jeden Kanals in die entsprechenden Kanalbereiche im Arbeitsspeicher (20), wobei die CPU (22) ferner zur Berechnung und Ausgabe von Daten ausgerüstet ist, welche zum Lesen der PCM-Daten aus dem Wellenformspeicher (10) für jeden Kanal erforderlich sind; und
einen Steuerschaltkreis (30) zum Lesen der PCM-Daten aus dem Wellenformspeicher (10) für jeden Kanal und zum Eingeben dieser PCM-Daten in die Überabtasteinrichtung (32) und zwar auf der Grundlage der von der CPU (22) berechneten und ausgegebenen Daten sowie den im Arbeitsspeicher (20) eingeschriebenen Daten.

3. Vorrichtung nach Anspruch 2,
dadurch **gekennzeichnet,**
daß der Steuerschaltkreis (30) zur sequentiellen Ausgabe einer PCM-Daten-Leseadresse für jeden Kanal an den Wellenformspeicher (10) in der Art eines Timesharing-Verfahrens und zum sequentiellen Lesen von PCM-Daten ausgebildet ist, welche durch jede der Leseadressen für jeden Kanal adressiert werden.

4. Vorrichtung nach Anspruch 3,
dadurch **gekennzeichnet,**
daß der Steuerschaltkreis (30) zum Inkrementieren der PCM-Leseadresse für jeden Kanal in einem abgekürzten Zeitintervall ausgebildet ist, wenn es gewünscht ist, ein höheres Intervall des Kanals festzusetzen, und um die PCM-Leseadresse in einem verlängerten Zeitintervall zu inkrementieren, wenn es gewünscht wird, ein niedrigeres Intervall in diesem Kanal festzusetzen, wobei die Musikintervalle der gelesenen PCM-Daten für diesen Kanal gesteuert werden können.

5. Vorrichtung nach Anspruch 4,
dadurch **gekennzeichnet,**
daß der Wellenformspeicher (10) zum Abspeichern der PCM-Daten ausgebildet ist, welche die Anzahl der verwendeten Kanäle übersteigen, und daß der Steuerschaltkreis (30) zum Lesen der PCM-Daten von den Kanälen in jeder Kombination und dann zu deren Eingeben in die Überabtasteinrichtung (32) ausgebildet ist.

6. Vorrichtung nach Anspruch 1,
dadurch **gekennzeichnet,**
daß die Überabtasteinrichtung (32) zur N-fachen Interpolation der aus dem Wellenformspeicher (10) gelesenen PCM-Daten für jeden Kanal (wobei N eine ganze Zahl ist) und zum Schieben der Abtastfrequenz der PCM-Daten für jeden Kanal in den Hochfrequenzbereich ausgebildet ist.

7. Vorrichtung nach Anspruch 1,
dadurch **gekennzeichnet,**
daß die Überabtasteinrichtung (32) zur Interpolation der aus dem Wellenformspeicher (10) gelesenen PCM-Daten für jeden Kanal unter Verwendung der Lagrange'schen Interpolationsformel und zum Schieben der Abtastfrequenz der PCM-Daten für jeden Kanal in den Hochfrequenzbereich ausgebildet ist.

8. Vorrichtung nach Anspruch 1,
dadurch **gekennzeichnet,**
daß die Überabtasteinrichtung (32) zur Interpolation der aus dem Wellenformspeicher (10) gelesenen PCM-Daten für jeden Kanal in der Art einer digitalen Filterung und zum Schieben der Abtastfrequenz der PCM-Daten für jeden Kanal in den Hochfrequenzbereich ausgebildet ist.

9. Vorrichtung nach Anspruch 6,
dadurch **gekennzeichnet,**
daß die Überabtasteinrichtung (32) zur Berechnung der aus dem Wellenformspeicher (10) gelesenen PCM-Daten in der Reihenfolge von Hₙ₋₁, Hₙ ... ausgebildet ist, um die m-ten interpolierten Daten H (wobei m eine ganze Zahl aus 0, 1 ... ist) zwischen Hₙ₋₁ und Hₙ nach der folgenden Formel zu erhalten: 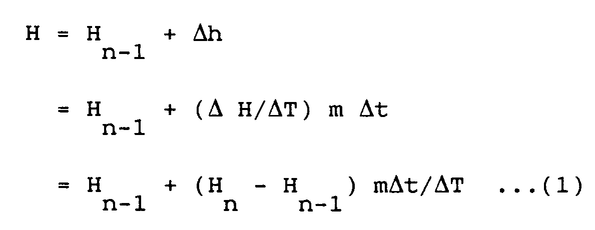 wobei jedoch ${\text{Δ T=T}}_{\text{n}} {\text{-T}}_{\text{n-1}}$ ist,
wobei Tₙ₋₁, Tₙ ... Zeiten darstellen, zu welchen jede der PCM-Daten gelesen werden und Δt ein Zeitintervall für jede der interpolierten Daten ist,
wobei die PCM-Daten für jeden der Kanäle N-fach interpoliert werden können.

10. Vorrichtung nach Anspruch 9,
dadurch **gekennzeichnet,**
daß die Überabtasteinrichtung (32) folgendes aufweist: einen Schalt-Schaltkreis (34) zum Halten und Ausgeben der darin vom Wellenformspeicher (10) eingegebenen PCM-Daten Hₙ₋₁;
einen Subtrahierer (36) zum Berechnen und Ausgeben von ${\text{Δ H=H}}_{\text{n}} {\text{- H}}_{\text{n-1}}$ von den neu vom Wellenformspeicher (10) eingegebenen PCM-Daten Hₙ und den vorhergehenden PCM-Daten Hₙ₋₁, die von der Schaltvorrichtung (34) ausgegeben wurden;
einen Frequenzdatenspeicher (40) zum Aufnehmen eines Anfangswertes (Δt/ΔT) der Frequenzdaten, welche das Musikintervall der PCM-Daten darstellen; einen Frequenzdatenaddierer (42) zur Berechnung von m (Δt/ΔT) unter Verwendung des Anfangswertes im Frequenzdatenspeicher (40);
einen Multiplizierer (38) zur Berechnung von $\text{Δh = (ΔH/ΔT) m ΔT}$ auf der Grundlage von eingegebenen Daten vom Addierer (42) und Frequenzdatenspeicher (40), und
einen weiteren Addierer (44) zur Berechnung und Ausgabe der aus dieser Gleichung (1) erhaltenen Daten H auf der Basis von eingegebenen Daten aus dem Multiplizierer (38) und Schalt-Schaltkreis (34).

11. Vorrichtung nach Anspruch 2,
dadurch **gekennzeichnet,**
daß der Wellenformspeicher (10) zur Speicherung von PCM-Daten ausgebildet ist, welche die Anzahl der verwendeten Kanäle übersteigen und wobei der Steuerschaltkreis (30) zum Lesen der PCM-Daten für jeden Kanal in jeder Kombination und zum Einlesen von ihnen in die Überabtasteinrichtung (32) ausgebildet ist.

12. Vorrichtung nach Anspruch 3,
dadurch **gekennzeichnet,**
daß die Überabtasteinrichtung (32) zur Berechnung der PCM-Daten, die vom Wellenformspeicher (10) in der Reihenfolge Hₙ₋₁, Hₙ ... zum Erhalt der m-ten interpolierten Daten H (wobei m eine ganze Zahl aus 0,1 ... ist) zwischen Hₙ₋₁ und Hₙ durch die folgende Formel ausgebildet ist: 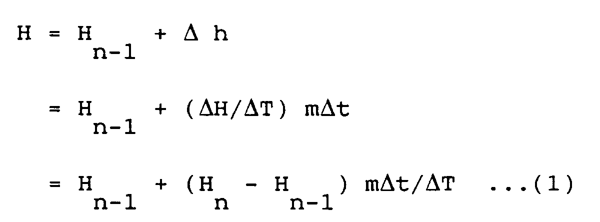 wobei jedoch ${\text{ΔT = T}}_{\text{n}} {\text{- T}}_{\text{n-1}}$ ist,
wobei Tₙ₋₁, Tₙ ... Zeiten darstellen, zu welchen jeweils die PCM-Daten gelesen werden und Δt ein Zeitintervall für jede der interpolierten Daten ist,
wobei die PCM-Daten für jeden der Kanäle N-fach interpoliert werden können.

13. Vorrichtung nach Anspruch 12,
dadurch **gekennzeichnet,**
daß der Steuerschaltkreis zur Ausgabe des Anfangswertes Δt/ΔT der Frequenzdaten ausgebildet ist, welche das Musikintervall der neu gelesenen PCM-Daten aus dem Wellenformspeicher (10) darstellen, und daß die Überabtasteinrichtung (32) einen Schalt-Schaltkreis (34) zum Halten und Ausgeben der PCM-Daten Hₙ₋₁ aufweist, welche dorthin aus dem Wellenformspeicher (10) eingegeben wurden; daß ein Subtrahierer (36) zum Berechnen und Ausgeben von ${\text{ΔH=H}}_{\text{n}} {\text{-H}}_{\text{n-1}}$ von den neu vom Wellenformspeicher (10) eingegebenen PCM-Daten Hₙ und den zuvor von der Schaltvorrichtung (34) ausgegebenen PCM-Daten Hₙ₋₁ vorhanden ist; daß ein Frequenzdatenspeicher (40) zum Empfang eines Anfangswertes (Δt/ΔT) der Frequenzdaten vorhanden ist, welche das Musikintervall der PCM-Daten darstellen; daß ein Frequenzdatenaddierer (42) zum Berechnen von m(Δt/ΔT) unter Verwendung des Anfangswertes im Frequenzdatenspeicher (40) vorhanden ist; daß ein Multiplizierer (38) zum Berechnen von $\text{Δh=(ΔH/ΔT) mΔT}$ 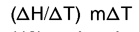 auf der Grundlage von eingegebenen Daten vom Addierer und Frequenzdatenspeicher (42) vorhanden ist; und daß ein weiterer Addierer (44) zur Berechnung und Ausgabe der interpolierten Daten H vorhanden ist, welche aus der Gleichung (1) auf der Grundlage von Daten aus dem Multiplizierer (38) und dem Schalt-Schaltkreis (34) vorhanden ist.

14. Vorrichtung nach Anspruch 10,
dadurch **gekennzeichnet,**
daß die Überabtasteinrichtung (32) zur wiederholten Ausführung der N-fachen Interpolation von PCM-Daten für jeden Kanal in der Art eines Timesharing-Verfahren ausgebildet ist.

15. Vorrichtung nach Anspruch 14,
dadurch **gekennzeichnet,**
daß die Summationseinrichtung (48) zum sequentiellen Akkumulieren der berechneten und von der Überabtasteinrichtung (32) ausgegebenen Daten für die betreffenden Kanäle und zur Ausgabe des akkumulierten Wertes an die D/A-Wandlereinrichtung (62) ausgebildet ist, und zwar sobald die berechneten Daten für den letzten Kanal zu den vorherigen akkumulierten Daten hinzuaddiert wurden.

16. Vorrichtung nach Anspruch 2,
dadurch **gekennzeichnet,**
daß die Überabtasteinrichtung (32) Rechts- und Links-Kanal-Multiplizierer (46R, 46L) aufweist, von welchen alle in der Rückwärtsstufe der Überabtasteinrichtung (32) vorgesehen sind, sowie Rechts- und Links-Kanal-Addiereinrichtungen (48R, 48L), welche in den Rückwärtsstufen der Rechts- und Links-Kanal-Multiplizierer (46R, 46L) angeordnet sind, wobei der Steuerschaltkreis (30) zur Ausgabe von Lautstärkedaten, welche linke und rechte Lautstärken in den gelesenen PCM-Daten angeben, an die Rechts- und Links-Kanal-Multiplizierer (46R, 46L) ausgebildet ist, wobei ferner die Rechts- und Links-Kanal-Multiplizierer (46R, 46L) zum Multiplizieren der interpolierten Daten H ausgebildet sind, welche von der Überabtasteinrichtung (32) mittels der Rechts- und Links-Kanal-Lautstärkedaten ausgegeben werden, und daß die Rechts- und Links-Kanal-Addiereinrichtung (48R, 48L) zur sequentiellen Akkumulation der berechneten Daten ausgebildet ist, welche sequentiell vom entsprechenden Multiplizierer für die betreffenden Kanäle ausgegeben werden, und zur Ausgabe der akkumulierten Daten an die D/A-Wandlereinrichtung (62) in der rückwärtigen Stufe derselben, sobald die Akkumulation für den letzten Kanal abgeschlossen ist.

17. Vorrichtung nach Anspruch 16,
dadurch **gekennzeichnet,**
daß die Tiefpaßfiltereinrichtung (64) Rechts- und Links-Kanal-Tiefpaßfilter (64R, 64L) umfaßt, wobei der Rechts-Kanal-Tiefpaßfilter (64R) zur Beseitigung von Falt-Rauschen ausgebildet ist, welches in den PCM-Daten vom Ausgang der Rechts-Kanal-Addiereinrichtung (48R) durch die D/A-Wandlereinrichtung (62) enthalten ist, und daß der Links-Kanal-Tiefpaßfilter (64L) zur Beseitigung von Falt-Rauschen ausgebildet ist, welches in den PCM-Daten vom Ausgang der Links-Kanal-Addiereinrichtung (48L) durch die D/A-Wandlereinrichtung (62) enthalten ist.

18. Vorrichtung nach Anspruch 13,
dadurch **gekennzeichnet,**
daß die Überabtasteinrichtung (32) zur wiederholten Ausführung der N-fachen Interpolation von PCM-Daten für jeden Kanal in der Art eines Timesharing-Verfahren ausgebildet ist.

19. Vorrichtung nach Anspruch 18,
**gekennzeichnet** durch
Rechts- und Links-Kanal-Multiplizierer (46R, 46L), die alle in der Rückwärtsstufe der Überabtasteinrichtung (32) angeordnet sind, und durch Rechts- und Links-Kanal-Addiereinrichtungen (48R, 48L), welche in der rückwärts gerichteten Stufe des Rechts- und Links-Kanal-Multiplizierers (46R, 46L) vorhanden sind, wobei der Steuerschaltkreis (30) zur Ausgabe von Lautstärkedaten ausgebildet ist, welche die linke und rechte Lautstärke in den gelesenen PCM-Daten an die Rechts- und Links-Kanal-Multiplizierer (46R, 46L) angeben, wobei die Rechts- und Links-Kanal-Multiplizierer (46R, 46L) zur Multiplikation der interpolierten Daten H ausgebildet sind, welche von der Überabtasteinrichtung (32) mittels der Rechts- und Links-Kanal-Lautstärkedaten ausgegeben werden, und wobei die Rechts- und Links-Kanal-Addiereinrichtung (48R, 48L) zur sequentiellen Akkumulation der berechneten Daten ausgebildet ist, welche sequentiell von dem zugehörigen Multiplizierer für die entsprechenden Kanäle ausgegeben werden, und zur Ausgabe der akkumulierten Daten an die D/A-Wandlereinrichtung (62) in deren Rückwärtsstufe, sobald die Akkumulation für den letzten Kanal abgeschlossen ist.

20. Vorrichtung nach Anspruch 19,
dadurch **gekennzeichnet,**
daß die Tiefpaßfiltereinrichtung (64) Rechts- und Links-Kanal-Tiefpaßfilter (64R, 64L) umfaßt, wobei der Rechts-Kanal-Tiefpaßfilter (64R) zur Beseitigung von Falt-Rauschen ausgebildet ist, welches in den PCM-Daten vom Ausgang der Rechts-Kanal-Addiereinrichtung (48R) durch die D/A-Wandlereinrichtung (62) enthalten ist, und daß der Links-Kanal-Tiefpaßfilter (64L) zur Beseitigung von Falt-Rauschen ausgebildet ist, welches in den PCM-Daten vom Ausgang der Links-Kanal-Addiereinrichtung (48L) durch die D/A-Wandlereinrichtung (62) enthalten ist.

21. Vorrichtung nach Anspruch 1,
dadurch **gekennzeichnet,**
daß die Überabtasteinrichtung (32) zum Schieben der PCM-Daten, welche von jedem Kanal gelesen werden, in Richtung auf die Hochfrequenzseite ausgebildet ist, während die Zahl der Bits in den PCM-Daten erhöht wird.

## Revendications

1. Appareil pour synthétiser des signaux analogiques, cet appareil comprenant une mémoire de forme d'onde (10) destinée à stocker un certain nombre de signaux analogiques codés sous la forme de données PCM (à modulation codée par impulsions) échantillonnés à différentes fréquences d'échantillonnage, les parties de ces données PCM correspondant à plusieurs canaux lus dans la mémoire de forme d'onde et utilisés pour synthétiser les signaux analogiques, appareil caractérisé en ce qu'il comprend :
des moyens de suréchantillonnage (32) destinés à décaler vers une fréquence plus élevée la fréquence d'échantillonnage des données PCM lues dans la mémoire de forme d'onde (10) pour chaque canal ;
des moyens (48) pour additionner les données PCM suréchantillonnées des canaux respectifs ;
des moyens de conversion numérique/analogique (62) pour convertir les données additionnées en un signal analogique ; et
un filtre passe-bas commun (64) pour régler une fréquence de coupure sur la base des fréquences d'échantillonnage décalés vers la fréquence plus élevées, et pour supprimer tout bruit parasite compris dans les données PCM provenant du signal analogique synthétisé ; ce qui permet ainsi d'effectuer la suppression du bruit parasite compris dans les données PCM pour chaque canal, au niveau du filtre passe-bas commun (64).

2. Appareil selon la revendication 1, caractérisé en ce qu'il comprend une mémoire de travail (20) munie d'un certain nombre de zones de canaux dans chacune desquelles sont stockées les données de chaque canal ; une CPU (unité centrale de traitement) (22) destinée à effectuer un calcul synthétisant les signaux analogiques suivant un programme opérationnel prédéterminé, et à écrire les données de sortie de chaque canal dans la zone de canal correspondante de la mémoire de travail (20), cette CPU (22) étant en outre destinée à calculer et à fournir en sortie les données nécessaires à la lecture des données PCM provenant de la mémoire de forme d'onde (10) pour chaque canal; et un circuit de commande (30) destiné à lire les données PCM de la mémoire de forme d'onde (10) pour chaque canal, et à introduire ces données dans les moyens de suréchantillonnage (32), sur la base des données calculées, et fournies en sortie, par la CPU (22) et des données écrites dans la mémoire de travail (20).

3. Appareil selon la revendication 2, caractérisé en ce que le circuit de commande (30) est destiné à fournir séquentiellement en sortie l'adresse de lecture de données PCM pour chaque canal vers la mémoire de forme d'onde (10) dans un processus en temps partagé, et à lire séquentiellement les données PCM adressées par chacune des adresses de lecture pour chaque canal.

4. Appareil selon la revendication 3, caractérisé en ce que le circuit de commande (30) est destiné à augmenter d'un pas l'adresse de lecture PCM pour un canal quelconque dans un intervalle de temps raccourci lorsqu'on désire régler un intervalle plus haut du canal, et à augmenter d'un pas l'adresse de lecture PCM dans un intervalle de temps prolongé lorsqu'on désire régler un intervalle plus bas dans le canal, ce qui permet ainsi de commander l'intervalle musical des données PCM lues pour ce canal.

5. Appareil selon la revendication 4, caractérisé en ce que la mémoire de forme d'onde (10) est destinée à stocker les données PCM qui dépassent le nombre des canaux utilisés, et en ce que le circuit de commande (30) est destiné à lire les données PCM des canaux suivant une combinaison quelconque, puis à les introduire dans les moyens de suréchantillonnage (32).

6. Appareil selon la revendication 1, caractérisé en ce que les moyens de suréchantillonnage (32) sont destinés à former une interpolation d'ordre N des données PCM lues dans la mémoire de forme d'onde (10) pour chaque canal (N étant un nombre entier), et à décaler la fréquence d'échantillonnage des données PCM pour chaque canal vers le côté haute fréquence.

7. Appareil selon la revendication 1, caractérisé en ce que les moyens de suréchantillonnage (33) sont destinés à former une interpolation des données PCM lues dans la mémoire de forme d'onde (10) pour chaque canal en utilisant la formule d'interpolation de Lagrange, et à décaler la fréquence d'échantillonnage des données PCM pour chaque canal vers le côté haute fréquence.

8. Appareil selon la revendication 1, caractérisé en ce que les moyens de suréchantillonnage (32) sont destinés à former une interpolation des données PCM lues dans la mémoire de forme d'onde (10) pour chaque canal en utilisant un filtrage numérique, et à décaler la fréquence d'échantillonnage des données PCM pour chaque canal vers le côté haute fréquence.

9. Appareil selon la revendication 6, caractérisé en ce que les moyens de suréchantillonnage (32) sont destinés à calculer les données PCM lues dans la mémoire de forme d'onde (10) dans l'ordre Hₙ₋₁, Hₙ ... de manière à obtenir la m^{ième} donnée H interpolée (m étant un nombre entier représentatif de 0, 1 ...) entre Hₙ₋₁ et Hₙ par l'équation suivante : 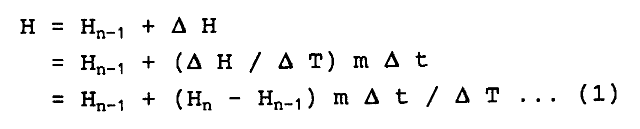 mais ${\text{Δ T = T}}_{\text{n}} {\text{- T}}_{\text{n-1}}$
où Tₙ₋₁ , Tₙ ... représentent les instants auxquels chacune des données PCM est lue, et Δ t est un intervalle de temps pour chacune des données interpolées, de sorte que les données PCM de chacun des canaux peuvent être interpolées par une interpolation d'ordre N.

10. Appareil selon la revendication 9, caractérisé en ce que les moyens de suréchantillonnage (32) comprennent :
un circuit de loquet (34) pour maintenir et fournir en sortie des données PCM Hₙ₋₁ introduites dans celui-ci à partir de la mémoire de forme d'onde (10) ;
un soustracteur (36) pour calculer et fournir en sortie ${\text{Δ H = H}}_{\text{n}} {\text{- H}}_{\text{n-1}}$ provenant de la donnée PCM Hₙ nouvellement introduite à partir de la mémoire de forme d'onde (10), et de la donnée PCM Hₙ₋₁ précédente fournie en sortie par les moyens de loquet (34) ;
une mémoire de données de fréquence (40) pour recevoir une valeur initiale (Δ t / Δ T) des données de fréquence représentant l'intervalle musical des données PCM ;
un additionneur de données de fréquence (42) pour calculer m (Δ t/ Δ T) en utilisant la valeur initiale dans la mémoire de données de fréquence (40) ;
un multiplicateur (38) pour calculer $\text{Δ h = (Δ H/ Δ T) m Δ T}$ sur la base des données d'entrée provenant de l'additionneur (42) et de la mémoire de données de fréquence (40) ;
un autre additionneur (44) pour calculer et fournir en sortie les données interpolées H obtenues à partir de l'équation (1), sur la base des données d'entrée provenant du multiplicateur (38) et du circuit de loquet (34).

11. Appareil selon la revendication 2, caractérisé en ce que la mémoire de forme d'onde (10) est destinée à stocker les données PCM qui dépassent le nombre de canaux utilisés, et en ce que le circuit de commande (30) est destiné à lire les données PCM pour chaque canal dans une combinaison quelconque et à les introduire dans les moyens de suréchantillonnage (32).

12. Appareil selon la revendication 3, caractérisé en ce que les moyens de suréchantillonnage (32) sont destinés à calculer les données PCM lues dans la mémoire de forme d'onde (10) dans l'ordre Hₙ₋₁ , Hₙ ... de manière à obtenir la m^{ième} donnée H interpolée (m étant un nombre entier représentatif de 0, 1 ...) entre Hₙ₋₁ et Hₙ par l'équation suivante : 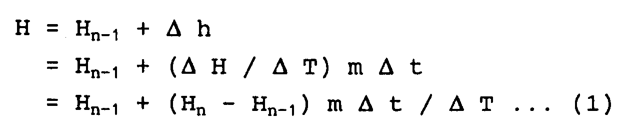 cependant que ${\text{Δ T = T}}_{\text{n}} {\text{- T}}_{\text{n-1}}$ ,
où Tₙ₋₁ , Tₙ ... représentent les instants auxquels chacune des données PCM est lue, et Δ t est un intervalle de temps pour chacune des données interpolées, de sorte que les données PCM de chacun des canaux peuvent être interpolées par une interpolation d'ordre N.

13. Appareil selon la revendication 12, caractérisé en ce que le circuit de commande est destiné à fournir en sortie la valeur initiale Δ t/ Δ T de la donnée de fréquence représentant l'intervalle musical de la donnée PCM nouvellement lue dans la mémoire de forme d'onde (10), et en ce que les moyens de suréchantillonnage (32) comprennent un circuit de loquet (34) pour maintenir et fournir en sortie les données PCM Hₙ₋₁ introduites dans celui-ci à partir de la mémoire de forme d'onde (10) ; un soustracteur (36) pour calculer et fournir en sortie ${\text{Δ H = H}}_{\text{n}} {\text{- H}}_{\text{n-1}}$ provenant de la donnée PCM Hₙ nouvellement introduite à partir de la mémoire de forme d'onde (10), et de la données PCM Hₙ₋₁ précédente fournie en sortie par les moyens de loquet (34) ; une mémoire de données de fréquence (40) pour recevoir une valeur initiale (Δ t/ Δ T) de la donnée de fréquence représentant l'intervalle musical de la donnée PCM ; un additionneur de données de fréquence (42) pour calculer m (Δ t/ Δ T) en utilisant la valeur initiale dans la mémoire de données de fréquence (40) ; un multiplicateur (38) pour calculer $\text{Δ h = (Δ H/ Δ T) m Δ T}$ sur la base des données d'entrée provenant de l'additionneur et de la mémoire de données de fréquence (42) ; et un autre additionneur (44) pour calculer et fournir en sortie la donnée interpolée H obtenue par l'équation (1) sur la base des données d'entrée provenant du multiplicateur (38) et du circuit de loquet (34).

14. Appareil selon la revendication 10, caractérisé en ce que les moyens de suréchantillonnage (32) sont destinés à effectuer de manière répétitive l'interpolation d'ordre N des données PCM pour chaque canal dans un processus en temps partagé.

15. Appareil selon la revendication 14, caractérisé en ce que les moyens d'addition (48) sont destinés à cumuler séquentiellement les données calculées fournies en sortie par les moyens de suréchantillonnage (32) pour les canaux respectifs, et à fournir en sortie la valeur cumulée vers les moyens de conversion numérique/analogique (62) lorsque les données calculées pour le dernier canal ont été ajoutées aux données cumulées précédentes.

16. Appareil selon la revendication 2, caractérisé en ce que les moyens de suréchantillonnage (32) comprennent des multiplicateurs de canal droit et de canal gauche (46R, 46L) tous prévus dans l'étage arrière des moyens de suréchantillonnage (32), et des moyens additionneurs de canal droit et de canal gauche (48R, 48L) prévus dans les étages arrières des multiplicateurs de canal droit et de canal gauche (46R, 46L), le circuit de commande (80) étant destiné à fournir en sortie des données de volume indiquant les volumes de gauche et de droite des données PCM de lecture vers les multiplicateurs de canal droit et de canal gauche (46R, 46L), ces multiplicateurs de canal droit et de canal gauche (46R, 46L) étant destinés à multiplier les données interpolées H fournies en sortie par les moyens de suréchantillonnage (32), par les données de volume de canal droit et de canal gauche, et les moyens additionneurs de canal droit et de canal gauche (46R, 46L) étant destinés à cumuler séquentiellement en sortie par le multiplicateur correspondant pour les canaux respectifs, et à fournir en sortie les données cumulées vers les moyens de conversion numérique/analogique (62) de ceux-ci lorsque le cumul est terminé pour le dernier canal.

17. Appareil selon la revendication 16, caractérisé en ce que les moyens de filtre passe-bas (64) comprennent des filtres passe-bas de canal droit et de canal gauche (64R, 64L), le filtre passe-bas de canal droit (64R) étant destiné à supprimer les bruits parasites compris dans les données PCM provenant de la sortie de moyens additionneurs de canal droit (48R) par les moyens de conversion numérique/analogique (62), et le filtre passe-bas de canal gauche (64L) étant destiné à supprimer les bruits parasites compris dans les données PCM provenant de la sortie des moyens additionneurs de canal gauche (48L) par les moyens de conversion numérique/analogique (62).

18. Appareil selon la revendication 13, caractérisé en ce que les moyens de suréchantillonnage (32) sont destinés à effectuer de manière répétitive l'interpolation d'ordre N des données PCM pour chaque canal par un processus en temps partagé.

19. Appareil selon la revendication 18, caractérisé en ce que les multiplicateurs de canal de droite et de canal de gauche (46R, 46L) sont prévus tous deux dans l'étage arrière des moyens de suréchantillonnage (32) et en ce que les moyens additionneurs de canal de droite et de canal de gauche (48R, 48L) sont prévus dans les étages arrières des multiplicateurs de canal de droite et de canal de gauche (46R, 46L), le circuit de commande (30) étant destiné à fournir en sortie les données de volume indiquant les volumes de gauche et de droite dans les données PCM de lecture vers les multiplicateurs de canal de droite et de canal de gauche (46R, 46L), les multiplicateurs de canal de droite et de canal de gauche (46R, 46L) étant destinés à multiplier les données d'interpolation H fournies en sortie à partir des moyens de suréchantillonnage (32) par les données de volume de canal de droite et de canal de gauche, et les moyens additionneurs de canal de droite et de canal de gauche (48R, 48L) étant destinés à cumuler séquentiellement en sortie par le multiplicateur correspondant pour les canaux respectifs, et à fournir en sortie les données cumulées vers les moyens de conversion numérique/analogique (62) dans l'étage arrière de ceux-ci lorsque le cumul est terminé pour le dernier canal.

20. Appareil selon la revendication 19, caractérisé en ce que les moyens de filtre passe-bas (64) comprennent des filtres passe-bas de canal de droite et de canal de gauche (64R, 64L), le filtre passe-bas du canal de droite (64R) étant destiné à supprimer les bruits parasites compris dans les données PCM provenant de la sortie des moyens additionneurs de canal de droite (48R) en passant par les moyens de conversion numérique/analogique (62), et le filtre passe-bas de canal de gauche (64L) étant destiné à supprimer les bruits parasites compris dans les données PCM provenant de la sortie des moyens additionneurs de canal de gauche (48L) en passant par les moyens de conversion numérique/analogique (62).

21. Appareil selon la revendication 1, caractérisé en ce que les moyens de suréchantillonnage (32) sont destinés à décaler les données PCM lues pour chaque canal, vers le côté haute fréquence tout en augmentant le nombre de bits dans les données PCM.
